# EUROPÄISCHE PATENTSCHRIFT

(11) **EP 3 900 131 B1**
(45) Veröffentlichungstag und Bekanntmachung des Hinweises auf die Patenterteilung: **28.12.2022**
(21) Anmeldenummer: 19836458.0
(22) Anmeldetag: 27.11.2019
(51) Int. Cl.: H02B 3/00, B25J 9/16, H02B 1/20, H02G 1/12

(54) **VERFAHREN ZUR ROBOTERGESTÜTZTEN VERDRAHTUNG VON ELEKTRISCHEN KOMPONENTEN EINER AUF EINER MONTAGEPLATTE ANGEORDNETEN ELEKTRISCHEN SCHALTANLAGE**
METHOD FOR ROBOT BASED CABLING OF ELECTRIC COMPONENTS OF A SWITCHGEAR MOUNTED ON A MOUNTING PLATE
MÉTHODE DE CÂBLAGE ROBOTISÉ DE COMPOSANTS ÉLECTRIQUES D'UNE INSTALLATION DE COMMUTATION MONTÉE SUR UNE PLATINE

(30) Priorität: 21.12.2018 DE 102018133319
(43) Veröffentlichungstag der Anmeldung: 27.10.2021
(73) Patentinhaber: Rittal GmbH & Co. KG, 35745 Herborn (DE)
(72) Erfinder: BÄCHLER, Andreas Michael, 35708 Haiger (DE)
(74) Vertreter: Angerhausen, Christoph
(86) Internationale Anmeldenummer: PCT/DE2019/101017
(87) Internationale Veröffentlichungsnummer: WO 2020/125851

(56) Entgegenhaltungen:
- DE-A1- 4 431 254
- Anonymous: "Schaltschrankbau- Unterverteilung und Gehäuse Automatisches Verdrahten | Schaltschrankbau- Unterverteilung und Gehäuse", , 22. Juni 2015 (2015-06-22), XP55672878, Gefunden im Internet: URL:https://www.schaltschrankbau-magazin.d e/artikel/automatisches-verdrahten/print/ [gefunden am 2020-03-02]
- M. BUSI ET AL: "The WIRES Experiment: Tools and Strategies for Robotized Switchgear Cabling", PROCEDIA MANUFACTURING, Bd. 11, 1. Januar 2017 (2017-01-01), Seiten 355-363, XP055539776, 43rd North American Manufacturing Research Conference, NAMRC 43, 8-12 June 2015, UNC Charlotte, North Carolina, United States ISSN: 2351-9789, DOI: 10.1016/j.promfg.2017.07.118
- System Robot Automazione: "Syndy, The independent solution", , 31. März 2012 (2012-03-31), Seiten 1-16, XP055539797, Visano, Italy Gefunden im Internet: URL:http://www.systemrobot.it/en/crlines/w iring-syndy [gefunden am 2019-01-09]

## Beschreibung

Die Erfindung betrifft ein Verfahren zur robotergestützten Verdrahtung von elektrischen Komponenten einer auf einer Montageplatte angeordneten elektrischen Schaltanlage gemäß dem Oberbegriff des Anspruchs 1. Ein derartiges Verfahren ist aus der Veröffentlichung "Schaltschrankbau-Unterverteilung und Gehäuse, Automatisches Verdrahten", 22. Juni 2015, abgerufen von: URL:https://www.schaltschrankbau-magazin.de/artikel/automatisches-verdrahten/print/; XP055672878. Ähnliche Verfahren sind auch in den folgenden beiden Veröffentlichungen beschrieben:
1. M. BUSI ET AL, "The WIRES Experiment: Tools and Strategies for Robotized Switchgear Cabling", PROCEDIA MANUFACTURING, Band 11, 01. Januar 2017, Seite 355-363; XP055539776; ISSN:2351-9789; und
2. System Robot Automazione, "Syndy, The independent solution", Visano, Italy 31. März 2012, Seite 1-16; abgerufen von: URL:http://www.systemrobot.it/en/crlines/wiring-syndy; XP055539797, Seite 13 - Seite 14.

Bei der Fertigung von Schalt- und Steuerungsanlagen ist die Verdrahtung der elektrischen Komponenten einer der zentralen und zeitintensivsten Arbeitsvorgänge, der bis heute weitestgehend manuell durchgeführt wird. Dabei stellt nicht nur die hohe Komplexität dieses Arbeitsvorgangs sondern vor allem auch der Anspruch einer hundertprozentigen Fehlerfreiheit große Anforderungen an den die Verdrahtung durchführenden Mitarbeiter.

Für die Optimierung des Verdrahtungsvorgangs gibt es verschiedene technische Hilfsmittel in unterschiedlichen Unterstützungsstufen. Dies reicht von Handwerkszeugen und/oder Halbautomaten zur Kabelkonfektionierung bis hin zu voll automatischen Anlagen, die einzelne Drähte vollständig konfektionieren, das heißt, ablängen, abisolieren, Aderendhülse aufbringen und vercrimpen. Die so hergestellten vorkonfektionierten Kabel können anschließend als loser und einzelner Draht, als sequenziell miteinander verbundene oder aufgereihte Drähte, oder als Drahtbündel ausgegeben werden. Eine auf eine Rolle aufgewickelte Kabelsequenz ist aus der
DE 10 2015 103 444 A1 bekannt. Die BE 101 965 1 A beschreibt einen multifunktionalen Bearbeitungskopf, der in den Endeffektor einer Verdrahtungsanlage integriert ist. Die DE 44 31 254 A1 und die EP 0917259 B1 beschreiben jeweils ein Verfahren und eine Vorrichtung zur Verdrahtung von Anschlussstellen von Komponenten elektrischer Geräte. Die EP 0259394 B1 beschreibt ein Werkzeug zum Verlegen von Kabeln.

Es ist daher die Aufgabe der Erfindung, ein Verfahren der eingangs beschriebenen Art derart weiterzuentwickeln, dass es einen möglichst hohen Automatisierungsgrad aufweist.

Diese Aufgabe wird durch ein Verfahren mit den Merkmalen des Anspruchs 1 gelöst. Die abhängigen Ansprüche betreffen jeweils vorteilhafte Ausführungsformen der Erfindung.

Demgemäß weist das Verfahren die Schritte auf:
- Bereitstellen einer Planung einer Schaltanlage, die zumindest Ortsinformation und Orientierungsinformation und Orientierungsinformation über eine Mehrzahl elektrischer Komponenten der Schaltanlage auf einer Montageplatte und Verdrahtungsinformation über eine Mehrzahl elektrischer Verdrahtungen zwischen jeweils zweien der elektrischen Komponenten aufweist;
- Extrahieren eines Kabelroutings, einschließlich einer Kabelquellkoordinate, einer Kabelzielkoordinate und einem Verlegeweg zwischen der Kabelquellkoordinate und der Kabelzielkoordinate aus der Verdrahtungsinformation für mindestens eine der Mehrzahl Verdrahtungen;
- Generieren von Trajektorien- und/oder Vektorpunkten entlang des Kabelroutings und Parametrisieren der Trajektorien- und/oder Vektorpunkte zur Erzeugung einer Robotersteuerung; und
- Ansteuern eines Roboters mit der Robotersteuerung.

Das Verfahren zeichnet sich durch das Anwenden einer Prüfroutine auf die Verdrahtungsinformation zur Bestimmung eines Automatisierungsgrades der Verdrahtungen und gegebenenfalls durch das Anpassen der Verdrahtungsinformation zur Maximierung des Automatisierungsgrades aus.

Die Planung der Schaltanlage, das heißt insbesondere die Ortsinformation und Orientierungsinformation über die Mehrzahl elektrischer Komponenten der Schaltanlage sowie die die Verdrahtung der Komponenten betreffende Verdrahtungsinformation können beispielsweise direkt aus einem 3D-ECAD-System bereitgestellt werden. Über dieses System können auch ergänzende Informationen betreffend die elektrische Schaltanlage, soweit sie die Verdrahtung unterstützen können, bezogen werden. Diese Informationen können beispielsweise eine individuelle Konfektionierung einzelner Kabel der Verdrahtung umfassen.

Das Verfahren weist das Anwenden einer Prüfroutine auf die Verdrahtungsinformation zur Bestimmung eines Automatisierungsgrades der Verdrahtungen und gegebenenfalls das Anpassen der Verdrahtungsinformation zur Maximierung des Automatisierungsgrades auf. Das Bestimmen des Automatisierungsgrades der Verdrahtung kann das Bestimmen einer Automatisierungstauglichkeit einzelner
Verdrahtungsschritte, bei denen jeweils zwei elektrische Komponenten der elektrischen Schaltanlage miteinander verdrahtet werden, umfassen.

Das Bereitstellen der Planung und das Anwenden der Prüfroutine auf die Verdrahtungsinformation sowie gegebenenfalls das Anpassen der Verdrahtungsinformation zur Maximierung des Automatisierungsgrades kann computergestützt und daher grundsätzlich ortsungebunden ausgeführt werden und muss daher nicht zwangsläufig auf einem beispielsweise für die Verdrahtung vorgesehenen Verdrahtungsautomaten durchgeführt werden. Die angepassten Verdrahtungsinformationen können beispielsweise durch manuelles Aufrufen an einem Verdrahtungsautomaten oder durch automatische Identifikation mittels Einlesen eines Produktidentifizierungscodes, beispielsweise eines RFID-Chips, auf die Verdrahtungsanlage importiert werden.

Das Bereitstellen der Planung der Schaltanlage kann weiterhin Komponenteninformationen aus der Planung bereitstellen, vorzugsweise mindestens eine Abmessung oder Kontur der Montageplatte, einen Typ mindestens einer der elektrischen Komponenten oder einer weiteren Komponenten der elektrischen Schaltanlage, eine Anschlussart mindestens einer der elektrischen Komponenten, eine Anschlusskoordinate und/oder ein Anschlussvektor mindestens einer der elektrischen Komponenten, oder eine Geometrie mindestens einer der elektrischen Komponenten oder einer weiteren Komponenten der elektrischen Schaltanlage.

Das Anwenden einer Prüfroutine auf die Verdrahtungsinformation zur Bestimmung eines Automatisierungsgrades der Verdrahtungen kann beispielsweise das Überprüfen mindestens einer Anschlussart (Leiteranschlussklemme oder dergleichen) einer der elektrischen Komponenten und/oder der Anschlusskoordinate einer der elektrischen Komponenten auf automatisierbare Kontaktierung umfassen. Beispielsweise kann ein Anschlusswinkel einer Leiteranschlussklemme einer elektrischen Komponente außerhalb oder innerhalb eines von einem Verdrahtungsroboter bedienbaren Winkelbereichs liegen.

Das Verfahren kann weiterhin das optische Erfassen einer tatsächlichen Anordnung der elektrischen Komponenten auf der Montageplatte und das Angleichen der Ortsinformation und Orientierungsinformation an die tatsächliche Anordnung aufweisen. Das optische Erfassen einer tatsächlichen Anordnung der elektrischen Komponenten auf der Montageplatte kann das Abscannen einer Montageebene der Montageplatte, auf welcher die elektrischen Komponenten angeordnet sind, umfassen. Das Abscannen kann mit Hilfe eines Roboters durchgeführt werden, vorzugsweise mit Hilfe des von der Robotersteuerung angesteuerten Roboters, beispielsweise mit Hilfe eines Knickarmroboters, der einen multifunktionalen Endeffektor mit einer optischen Erfassungseinrichtung, beispielsweise einer Kamera oder mit einem Scanner aufweisen. Der Knickarmroboter kann mit der Kamera die Montageplattenebene zeilenweise abscannen. Mit Hilfe der optisch erfassten tatsächlichen Anordnung der elektrischen Komponenten können Ist-Daten über die örtliche Anordnung der elektrischen Komponenten auf der Montageplattenebene erfasst und mit den in der Planung der Schaltanlage enthaltenen Soll-Daten, der Ortsinformation und Orientierungsinformation der Planung, abgeglichen werden. Es kann vorgesehen sein, dass bei Überschreiten eines Toleranzwertes für die örtliche Anordnung einer oder mehrerer Komponenten eine Anpassung der Ortsinformation und Orientierungsinformation an die tatsächliche Anordnung der Komponenten durchgeführt wird.

Das optische Erfassen der tatsächlichen Anordnung der elektrischen Komponenten kann das optische Erfassen einer individuellen Kennzeichnung, etwa eines QR-Codes, der elektrischen Komponenten umfassen. Die Identifizierung der elektrischen Komponenten kann jedoch auch mit Hilfe gängiger Methoden der Bilderkennung erfolgen, bei denen aus der Geometrie der erfassten Komponenten und einer relativen Anordnung verschiedener Komponenten zueinander auf der Montageebene auf individuelle Komponenten der elektrischen Schaltanlage geschlossen wird.

Das Verfahren kann das optische Erfassen einer tatsächlichen Anordnung der elektrischen Komponenten auf der Montageplatte und das Angleichen des Kabelroutings entsprechend eines erfassten Versatzes zwischen tatsächlicher Anordnung der elektrischen Komponenten und der Ortsinformation und Orientierungsinformation aufweisen.

Das Verfahren kann weiterhin das Generieren zusätzlicher Trajektorien- und/oder Vektorpunkte außerhalb des Kabelroutings aufweisen, die bei dem Parametrisieren der Trajektorien- und/oder Vektorpunkten zur Erzeugung der Robotersteuerung berücksichtigt werden. Dies ist insbesondere dann zweckmäßig, wenn die Planung der Schaltanlage ein idealisiertes Kabelrouting aufweist, etwa mit senkrecht zur elektrischen Komponenten zugeführten Kabeln und/oder mit einem Kabelrouting zwischen den kontaktierten Komponenten, das ausschließlich aus geraden Verlaufstrecken des Kabels besteht, die über rechte Winkel ineinander übergehen. Für die Automatisierung solcher Verdrahtungen kann es zweckmäßig sein, durch Kabelzugaben die rechten Winkel in runde Drahtrichtungsänderungen aufzuweichen bzw. eine Kontaktierung der Komponenten auch unter einem tatsächlichen Kontaktierungswinkel, der von dem idealen Winkel der Planung abweicht, zu ermöglichen.

Dabei kann das Generieren zusätzlicher Trajektorien- und/oder Vektorpunkte außerhalb des Kabelroutings das Verlagern von auf dem Kabelrouting liegenden Trajektorien- und/oder Vektorpunkten aufweisen, so dass diese außerhalb des Kabelroutings angeordnet sind. In dem Fall, dass bei dem Extrahieren ein Verlegeweg einer der elektrischen Verdrahtungen extrahiert wird, der eine 90°-Richtungsänderung aufweist, können zusätzliche Trajektorien- und/oder Vektorpunkte erzeugt werden, die dem Außenradius der 90°-Richtungsänderung um einen Abstand vorgelagert sind. Die zusätzlichen Trajektorien- und/oder Vektorpunkte außerhalb des Kabelroutings können somit insbesondere an Stellen des Kabelroutings generiert werden, an denen das Kabelrouting eine Richtungsänderung, beispielsweise eine 90°-Richtungsänderung, aufweist.

Das Generieren zusätzlicher Trajektorien- und/oder Vektorpunkte außerhalb des Kabelroutings kann das Generieren von Trajektorien- und/oder Vektorpunkten aufweisen, die auf einer Bahnkurve liegen, die einen bestimmten Mindestradius aufweist.

Die Trajektorien- und/oder Vektorpunkte für einen ersten Draht mit einem ersten Leiterquerschnitt, der größer als ein zweiter Leiterquerschnitt eines zweiten Drahts ist, können entlang einer Bahnkurve generiert werden, die einen größeren Radius aufweist, als der Radius der Bahnkurve, entlang welcher die Trajektorien- und/oder Vektorpunkte für den zweiten Draht generiert werden.

Das Generieren von Trajektorien- und/oder Vektorpunkten und das Parametrisieren der Trajektorien- und/oder Vektorpunkte zur Erzeugung der Robotersteuerung kann das Anwenden vorgefertigter Programmierbausteine aufweisen. Beispielsweise kann eine 90°-Richtungsänderung des zu erzielenden Kabelverlegewegs mit einer standardisierten Menge von Trajektorien- und/oder Vektorpunkten um den Kabelverlegeweg gemäß Planung umfassen, so dass ein automatisierbarer und parametrisierbarer Kabelverlegeweg erhalten wird.

Das optische Erfassen einer tatsächlichen Anordnung der elektrischen Komponenten auf der Montageplatte kann das optische Erfassen von Hindernissen und/oder das zeitgleiche Ermitteln von Abweichungen zwischen der Ortsinformation und Orientierungsinformation der Planung und der tatsächlichen Anordnung der elektrischen Komponenten auf der Montageplatte sowie das zeitgleiche Angleichen des Kabelroutings aufweisen.

Das Verfahren kann weiterhin das Extrahieren einer Drahtanschlussrichtung aus der Verdrahtungsinformation und das Generieren von Trajektorien- und/oder Vektorpunkten entlang der Drahtanschlussrichtung sowie das Parametrisieren dieser Trajektorien- und/oder Vektorpunkte zum Erzeugen der Robotersteuerung aufweisen.

Das Verfahren kann weiterhin das Extrahieren einer Kabelendbehandlung aus der Verdrahtungsinformation aufweisen, wobei das Verfahren das Parametrisieren einer an die Kabelendbehandlung angepassten Greifbewegung zur Ansteuerung des Roboters aufweist.

Weitere Einzelheiten der Erfindung werden anhand der nachstehenden Figuren erläutert. Dabei zeigt:
- Figur 1: ein schematisches Ablaufdiagramm eines beispielhaften Verfahrens zur robotergestützten Verdrahtung von elektrischen Komponenten einer auf einer Montageplatte angeordneten elektrischen Schaltanlage;
- Figur 2: in schematischer Darstellung das Generieren zusätzlicher Trajektorien- und/oder Vektorpunkte außerhalb des Kabelroutings im Bereich einer 90°-Richtungsänderung des Kabelroutings;
- Figur 3: in schematischer Darstellung das Generieren zusätzlicher Trajektorien- und/oder Vektorpunkte außerhalb des Kabelroutings für den gesamten Kabelverlauf zwischen zwei miteinander kontaktierten elektrischen Komponenten;
- Figur 4: eine erste Ausführungsform einer beispielhafte Vorrichtung zur Durchführung eines erfindungsgemäßen Verfahrens;
- Figur 5: eine zweite Ausführungsform einer beispielhaften Vorrichtung zur Durchführung des erfindungsgemäßen Verfahrens;
- Figur 6: eine dritte Ausführungsform einer beispielhaften Vorrichtung zur Durchführung des erfindungsgemäßen Verfahrens;
- Figur 7: eine vierte Ausführungsform einer beispielhaften Vorrichtung zur Durchführung des erfindungsgemäßen Verfahrens;
- Figur 8: eine fünfte Ausführungsform einer beispielhaften Vorrichtung zur Durchführung des erfindungsgemäßen Verfahrens;
- Figur 9: eine sechste Ausführungsform einer beispielhaften Vorrichtung zur Durchführung des erfindungsgemäßen Verfahrens;
- Figur 10: eine siebte Ausführungsform einer beispielhaften Vorrichtung zur Durchführung des erfindungsgemäßen Verfahrens;
- Figur 11: eine achte Ausführungsform einer beispielhaften Vorrichtung zur Durchführung des erfindungsgemäßen Verfahrens; und
- Figur 12: eine neunte Ausführungsform einer beispielhaften Vorrichtung zur Durchführung des erfindungsgemäßen Verfahrens.

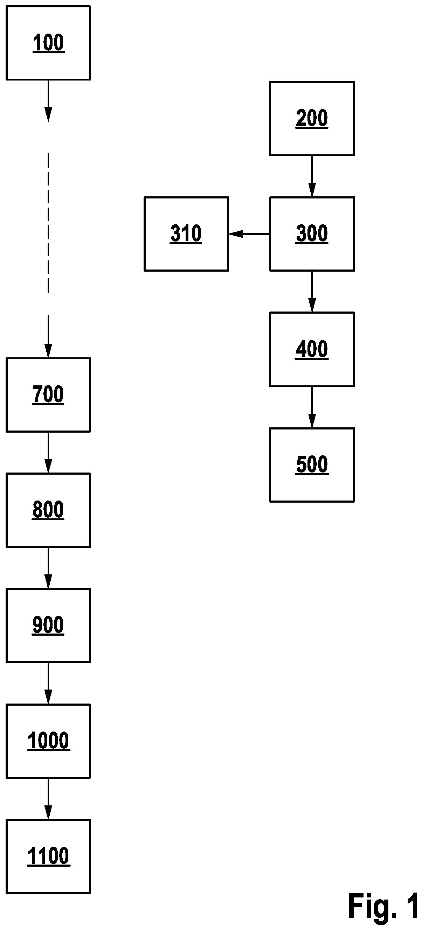

Bei dem in Figur 1 gezeigten Verfahren wird in einem Schritt 100 eine Planung einer Schaltanlage bereitgestellt, die zumindest Ortsinformation und Orientierungsinformation über eine Mehrzahl elektrischer Komponenten der Schaltanlage auf einer Montageplatte und Verdrahtungsinformationen über eine Mehrzahl elektrischer Verdrahtungen zwischen jeweils zwei in den elektrischen Komponenten aufweist.

In einem Schritt 200 wird eine Prüfroutine auf die Verdrahtungsinformation zur Bestimmung eines Automatisierungsgrades der Verdrahtungen angewendet. Je nach Ergebnis der Anwendung der Prüfroutine ist kann gegebenenfalls in einem folgenden Schritt 300 die Verdrahtungsinformation zur Maximierung des Automatisierungsgrades angepasst . Die Anpassung kann iterativ mit jeweils zwischengeschalteten Wiederholungen des Verfahrensschritts 200 erfolgen.

In dem Schritt 200 ist die Prüfroutine auf die Verdrahtungsinformation angewendet , um unter Berücksichtigung des Funktionsumfangs einer zur Verfügung stehenden Vorrichtung zur Durchführung des Verdrahtungsverfahrens einen maximal realisierbaren Automatisierungsgrad der Verdrahtung zu bestimmen. Daraufhin kann die Verdrahtungsinformation gegebenenfalls angepasst werden, um beispielsweise unter Berücksichtigung der zur Verfügung stehenden Vorrichtung für die Durchführung des Verdrahtungsverfahrens eine Maximierung des Automatisierungsgrads zu erreichen.

Im Rahmen des Anpassens der Verdrahtungsinformation im Schritt 300 können nicht automatisierbare Verdrahtungsschritte für die manuelle Verdrahtung 310 ausgesondert werden, so dass sie bei der automatisierten Verdrahtung 310 unberücksichtigt bleiben. Insoweit kann das Verfahren computergestützt durchgeführt werden, wie es in der EP 3392987 A1 beschrieben ist.

Das Verfahren kann weiterhin das optische Erfassen 400 einer tatsächlichen Anordnung der elektrischen Komponenten auf einer für die Verdrahtung bereitgestellten Montageplatte und das Angleichen 500 der Ortsinformation und Orientierungsinformation an die tatsächliche Anordnung aufweisen. Das optische Erfassen 400 kann das Abscannen der Montageebene der Montageplatte mit einem Laser-Profilmesssystem und/oder die Anwendung gängiger Bilderkennungsverfahren umfassen. Alternativ kann das optische Erfassen mit einer Stationären Kamera 14 oder mit einer Kamera 14 erfolgen, die an dem Roboter 8 montiert ist.

In einem Schritt 700 wird ein Kabelrouting, einschließlich einer Kabelquellkoordinate, einer Kabelzielkoordinate und einem Verlegeweg zwischen der Kabelquellkoordinate und der Kabelzielkoordinate aus der Verdrahtungsinformation für mindestens eine der Mehrzahl Verdrahtungen extrahiert.

In dem Schritt 800 werden Trajektorien- und/oder Vektorpunkte entlang des Kabelroutings generiert und in einem Schritt 900 werden die Trajektorien- und/oder Vektorpunkte zur Erzeugung einer Robotersteuerung parametrisiert.

Der Schritt 1000 umfasst das Generieren von zusätzlichen Trajektorien- und/oder Vektorpunkten und das Parametrisieren der zusätzlichen Trajektorien- und/oder Vektorpunkte zur Erzeugung der Robotersteuerung unter Anwendung vorgefertigter Programmierbausteine.

In dem Schritt 1100 wird ein Roboter unter Anwendung der Robotersteuerung angesteuert, so dass eine automatisierte Verdrahtung der elektrischen Komponenten der elektrischen Schaltanlage erreicht ist. Soweit die Verdrahtung nicht automatisierbar ist, kann sie manuell und computergestützt ausgeführt werden, wie es in der EP3392987 A1 beschrieben ist.

In dem Schritt 1100 kann das automatische Verdrahten der elektrischen Komponenten in einer vorgegebenen Verdrahtungsreihenfolge und unter Berücksichtigung der - gegebenenfalls angepassten - Verdrahtungsinformation und der angeglichenen Ortsinformation und Orientierungsinformation durchgeführt werden. Das Verdrahten kann das Abnehmen eines zumindest teilweise vorkonfektionierten oder eines unkonfektionierten Kabels mit einem Roboter von einer Übergabeschnittstelle aufweisen. Das Verdrahten kann alternativ oder zusätzlich das sequentielle Herstellen einer Mehrzahl individuell vorkonfektionierter Kabel in der Verdrahtungsreihenfolge aufweisen, gegebenenfalls "in-time" mit dem Verdrahten, so dass an der Übergabeschnittstelle immer gerade das als nächstes zu verdrahtende Kabel für die Abnahme bereitgestellt ist.

Das automatisierte Verdrahten kann das Abnehmen eines zumindest teilweise vorkonfektionierten oder eines unkonfektionierten Kabels mit einem Roboter, vorzugsweise mit einem Knickarmroboter, von einer Übergabeschnittstelle für die Übergabe der zumindest teilweise vorkonfektionierten oder unkonfektionierten Kabel aufweisen.

Das Abnehmen eines zumindest teilweise vorkonfektionierten Kabels kann das Abnehmen eines auf eine bestimmte Länge abgelängten Kabels von der Übergabeschnittstelle eines Kabelablängautomaten aufweisen.

Nach dem Abnehmen des Kabels von der Übergabeschnittstelle kann das Verfahren weiterhin das Konfektionieren mindestens eines zumindest teilweise vorkonfektionierten oder eines unkonfektionierten Endes des Kabels aufweisen, wozu das Kabelende mit dem Roboter einem Kabelendbearbeitungsautomaten zugeführt und von diesem nach erfolgter Kabelendbehandlung wieder entnommen wird.

Das Abnehmen kann das Greifen eines ersten vorkonfektionierten Kabelendes des vorkonfektionierten Kabels und das Zuführen sowie das elektrische Kontaktieren des ersten vorkonfektionierten Kabelendes an einer Kabelanschlussstelle einer ersten elektrischen Komponente aufweisen.

Das Verfahren kann weiterhin das sequentielle Übergeben einer Mehrzahl individuell vorkonfektionierter Kabel über eine Übergabeschnittstelle an mindestens einen Roboter aufweisen, der vorzugsweise als ein Knickarmroboter ausgebildet ist.

Ebenso kann das automatisierte Verdrahten das Vorkonfektionieren einer Mehrzahl von Kabeln in der Verdrahtungsreihenfolge sowie unter Berücksichtigung von Verdrahtungsinformation aufweisen. Die Verdrahtungsinformation kann beispielsweise je Verdrahtung zweier elektrischer Komponenten mindestens ein Kabelrouting und mindestens eine Kabelbeschaffenheit, vorzugsweise eine Kabellänge, einen Kabelquerschnitt, eine Kabelfarbe, eine Aderendbehandlung und/oder eine Kabelmarkierung aufweisen.

Nachdem ein Kabelende einer elektrischen Komponente zugeführt und mit dieser elektrisch kontaktiert worden ist, kann das Verfahren das Durchführen einer Abzugskontrolle aufweisen, wozu ein Roboter beispielsweise mit einem zugkraftsensitiven Greifer an dem kontaktierten Kabelende angreift und das Kabelende mit einer vorgegebenen Abzugskraft entgegen einer Kontaktierungsrichtung des Kabelendes beaufschlagt. Eine ordnungsgemäße Kontaktierung des Kabelendes kann angenommen werden, wenn die Kontaktierung der vorgegebenen Abzugskraft standhält und insbesondere eine Dekontaktierung des Kabelendes unterbleibt. Weiterhin kann eine elektrische Prüfung der Kontaktierung erfolgen, etwa mithilfe einer Kontaktwiderstandsmessung.

Das Abnehmen eines vorkonfektionierten oder unkonfektionierten Kabels mit einem Roboter kann das Abnehmen eines ersten Kabelendes des Kabels mit einem ersten Roboter und das Abnehmen eines zweiten Kabelendes des Kabels mit einem zweiten Roboter aufweisen. Mithin wird das Kabel an seinen beiden Enden von unterschiedlichen Robotern gehalten. Bei dieser Ausführungsform können die beiden Roboter bis zur Kontaktierung eines der beiden Kabelenden in einem Master-Slave-Modus betrieben werden, im Rahmen welches der Master-Roboter das vor dem anderen Kabelende zuerst zu verdrahtende Kabelende einer der elektrischen Komponenten zuführt während der Slave-Roboter das nachfolgend zu verdrahtende Kabel in dem zeitgleich ausgeführten Schritt nachführt.

Das Nachführen kann das Halten des nachfolgend zu verdrahtenden Kabelendes unter Einhaltung eines Mindestabstandes zu einer Montageebene der Montageplatte und/oder das Straffen des nachfolgend zu verdrahtenden Kabelendes, wenn das Kabel biegeschlaff ist, aufweisen und/oder das Halten des nachfolgend zu verdrahtenden Kabelende unter einer mechanischen Vorspannung.

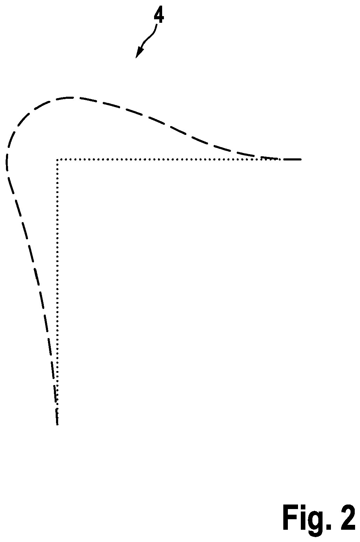

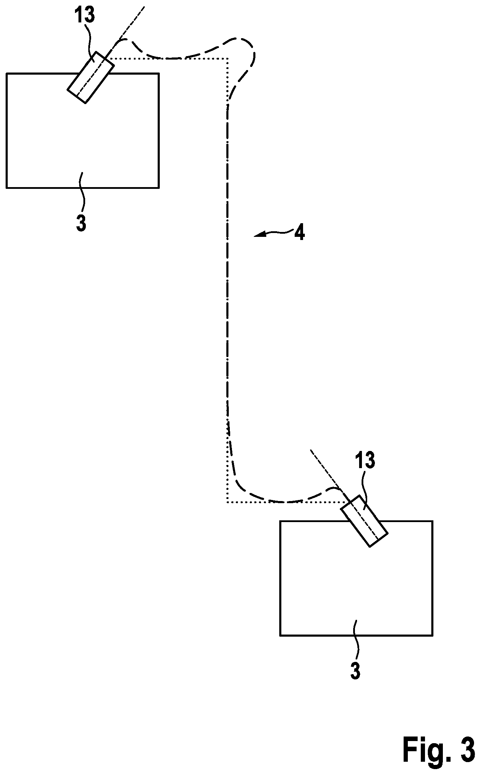

Die Figur 2 veranschaulicht das Generieren zusätzlicher Trajektorien- und/oder Vektorpunkte entlang der eingezeichneten Strichlinie außerhalb des von der Planung vorgegebenen idealisierten Kabelroutings (wiedergegeben durch die Punktlinie) im Bereich einer 90°-Richtungsänderung des Kabelroutings und die Figur 3 das Generieren zusätzlicher Trajektorien- und/oder Vektorpunkte außerhalb des Kabelroutings für den gesamten Kabelverlauf zwischen zwei miteinander kontaktierten elektrischen Komponenten.

Das Verfahren kann weiterhin das Generieren zusätzlicher Trajektorien- und/oder Vektorpunkte außerhalb des Kabelroutings aufweisen, die bei dem Parametrisieren der Trajektorien- und/oder Vektorpunkten zur Erzeugung der Robotersteuerung berücksichtigt werden. Dies ist insbesondere dann zweckmäßig, wenn die Planung der Schaltanlage ein idealisiertes Kabelrouting aufweist, etwa mit senkrecht zur elektrischen Komponenten zugeführten Kabeln und/oder mit einem Kabelrouting zwischen den kontaktierten Komponenten, das ausschließlich aus geraden Verlaufstrecken des Kabels besteht, die über rechte Winkel ineinander übergehen. Für die Automatisierung solcher Verdrahtungen kann es zweckmäßig sein, durch Kabelzugaben die rechten Winkel in runde Drahtrichtungsänderungen aufzuweichen bzw. eine Kontaktierung der Komponenten auch unter einem tatsächlichen Kontaktierungswinkel, der von dem idealen Winkel der Planung abweicht, zu ermöglichen.

Dabei kann das Generieren zusätzlicher Trajektorien- und/oder Vektorpunkte außerhalb des Kabelroutings das Verlagern von auf dem Kabelrouting liegenden Trajektorien- und/oder Vektorpunkten aufweisen, so dass diese außerhalb des Kabelroutings angeordnet sind. Beispielsweise können bei einer gemäß Planung vorgesehenen 90°-Richtungsänderung des Kabelverlaufs zusätzliche Trajektorien-und/oder Vektorpunkte erzeugt werden, die dem Außenradius der 90°-Richtungsänderung um einen Abstand vorgelagert sind.

Die zusätzlichen Trajektorien- und/oder Vektorpunkte werden außerhalb des Kabelroutings anstelle des von der Planung vorgegebenen idealisierten Kabelroutings generiert, beispielsweise an Positionen des Kabelroutings, wo es eine abrupte Richtungsänderung, hier eine 90°-Richtungsänderung zwischen zwei geraden und senkrecht zueinander stehenden Kabelabschnitten, aufweist. Das Generieren der zusätzlichen Trajektorien- und/oder Vektorpunkte außerhalb des Kabelroutings weist das Generieren von Trajektorien- und/oder Vektorpunkten auf, die auf einer Bahnkurve liegen, die einen bestimmten Mindestradius aufweist, beispielsweise einen Mindestradius von 5 cm, wodurch das automatisierte Verdrahten vereinfacht wird.

Die elektronischen Komponenten 3 weisen jeweils eine Kabelanschlussstelle 13 mit einer durch eine Punktlinie eingezeichneten Kabelanschlussrichtung auf. Demgemäß kann das Generieren der zusätzlichen Trajektorien- und/oder Vektorpunkte außerhalb des Kabelroutings das Generieren von Trajektorien- und/oder Vektorpunkten aufweisen, die entlang der Kabelanschlussrichtung der betreffenden elektronischen Komponente 3 liegen.

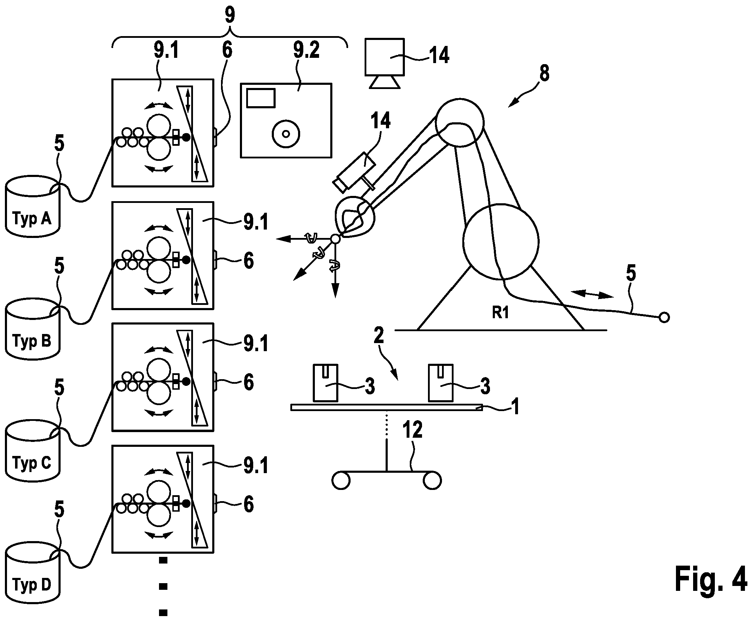

Die Figuren 4 bis 12 zeigen beispielhafte Ausführungsformen für Vorrichtungen zur Durchführung des erfindungsgemäßen Verfahrens zur robotergestützten Verdrahtung elektrischer Komponenten 3 einer auf einer Montageplatte 1 auszubildenden elektrischen Schaltanlage 2. Die Montageplatte 1 ist von einem Montageplattenhandlingwagen 12 horizontal ausgerichtet gehalten, so dass über einen Roboter 8 von oben auf die Komponenten 3 zwecks Kabelzuführung und Kabelanschluss zugegriffen werden kann.

Die beispielhaft beschriebenen Vorrichtungen zur Durchführung des erfindungsgemäßen Verfahrens können mit einem ECAD-System in Verbindung stehen, über welches eine Planung der Schaltanlage bereitgestellt wird, eine Prüfroutine auf die Verdrahtungsinformation angewendet und daraufhin die Verdrahtungsinformation zur Maximierung des Automatisierungsgrades angepasst wird. Die Anwendung der Prüfroutine auf die Verdrahtungsinformation sowie die Anpassung der Verdrahtungsinformation zur Maximierung des Automatisierungsgrades können auch unabhängig von dem ECAD-System auf einem gesonderten Computersystem durchgeführt werden, dass eine Schnittstelle sowohl zu dem ECAD-System als auch zu der Vorrichtung für die Verdrahtung der elektrischen Komponenten aufweist. Das Computersystem kann von dem ECAD-System dann die Planung der Schaltanlage beziehen, die Prüfroutine auf die Verdrahtungsinformation anwenden und gegebenenfalls eine Anpassung der Verdrahtungsinformation vornehmen. Das Computersystem kann auch dazu eingerichtet sein, das Drahtrouting, einschließlich Kabelquellkoordinate und/oder -vektor, Kabelzielkoordinate und/oder - vektor und Verlegeweg zwischen der Kabelquellkoordinate und der Kabelzielkoordinate aus der Verdrahtungsinformation für mindestens eine der Mehrzahl Verdrahtungen zu extrahieren. Das Computersystem kann ebeson dazu eingerichtet sein, die Trajektorien- und/oder Vektorpunkten entlang des Kabelroutings zu generieren und die Trajektorien- und/oder Vektorpunkte zur Erzeugung einer Robotersteuerung zu parametrisieren. Das Computersystem kann Bestandteil der Vorrichtung für die Durchführung des Verdrahtungsvorgangs sein.

Die Vorrichtung für die Durchführung des Verdrahtungsvorgangs kann einen multifunktionalen Endeffektor mit einer optischen Erfassungseinrichtung aufweisen für die optische Erfassung der tatsächlichen Anordnung der elektrischen Komponenten auf der Montageplatte. Nachdem die tatsächliche Anordnung der elektrischen Komponenten mit Hilfe der optischen Erfassungseinrichtung des multifunktionalen Endeffektors erfasst worden ist, kann diese Information dazu verwendet werden, um gegebenenfalls einer Angleichung der Ortsinformation und Orientierungsinformation an die tatsächliche Anordnung mit Hilfe des Computersystems durchzuführen. Das Computersystem sendet daraufhin eine entsprechend angepasste Planung der Schaltanlage beziehungsweise ein daraus erzeugtes Maschinensteuerungsprogramm an die Vorrichtung zur Verdrahtung der elektrischen Komponenten, so dass die Vorrichtung das automatisierte Verdrahten der elektrischen Komponenten in einer vorgegebenen Verdrahtungsreihenfolge, die gegebenenfalls von dem Computersystem im Rahmen der Anpassung der Verdrahtungsinformation zur Maximierung des Automatisierungsgrads überarbeitet worden ist.

Bei der in Figur 4 gezeigten Ausführungsform der Vorrichtung werden mit einer Mehrzahl Kabelablängautomaten 9.1 jeweils Kabel eines bestimmten Typs, z.B. Typen A-D, und jeweils einer bestimmten Länge bereitgestellt. Die Kabeltypen können sich etwa im Kabelquerschnitt, in der Kabelfarbe, oder in einem anderen Kabelmerkmal unterscheiden. Sämtliche Kabelmerkmale, einschließlich der Kabellänge, können der Planung der Schaltanlage, etwa in Form einer von dem ECAD-System bereitgestellten Planungsdatei entnommen werden.

Der Ein-Arm-Knickarmroboter 8 nimmt unmittelbar von einer Schnittstelle 6 des das Kabel 5 des gewünschten Typs bereitstellenden Kabelablängautomats 9 ab, um das abgelängte Kabel 5 für die Aderendbehandlung bestimmungsgemäßer Art dem Aderendbehandlungsautomat 9.2 nacheinander mit beiden Enden 7 für die jeweils erforderliche Nachbehandlung zuzuführen. Das Nachbehandeln kann insbesondere das Abisolieren, das Aufbringen einer Aderendhülse und das Crimpen der Aderendhülse aufweisen.

Nach der Aderendbehandlung kann der Ein-Arm-Knickarmroboter 8 das so erhaltene, vorkonfektionierte Kabel 5 auf der Montageplatte 1 entsprechend der Planung der Schaltanlage 2 in der in Bezug auf Figur 1 beschriebenen Weise verarbeiten, insbesondere entsprechend einer Planung der Schaltanlage 2 Komponenten 3 der Schaltanlage 2 verdrahten.

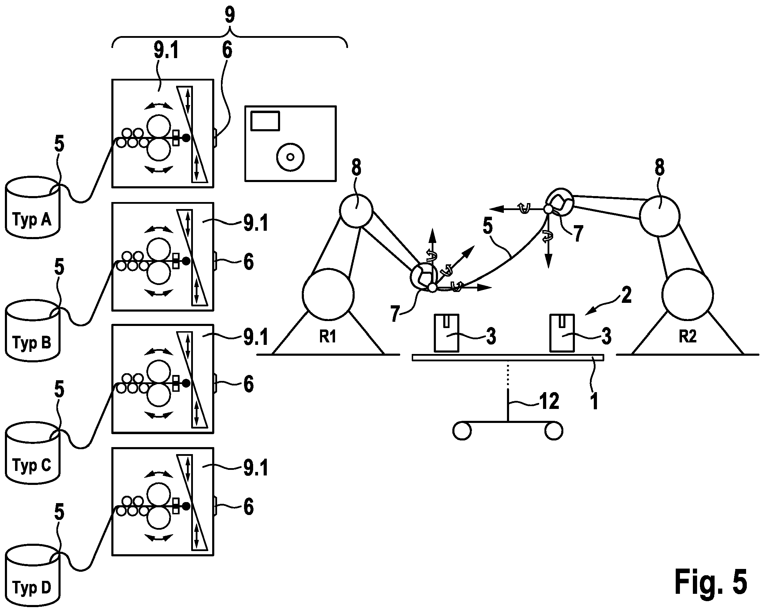

Die in Figur 5 gezeigte Ausführungsform unterscheidet sich von der in Figur 4 gezeigten Ausführungsform darin, dass anstelle eines einarmigen Knickarmroboters 8 ein zweiarmiger Knickarmroboter 8 verwendet wird. Soweit in der vorliegenden Anmeldung einem ersten und einem zweiten Roboter, insbesondere von einem ersten und zweiten Knickarmroboter 8 gesprochen wird, kann dies auch durch den in Figur 5 gezeigten zweiarmigen Knickarmroboter 8 realisiert sein. Die beiden Arme des Knickarmroboters 8 können kooperativ zusammenarbeiten wie dies mit Bezug auf Figur 1 beschrieben ist. Insbesondere indem die beiden Roboter 8 in einem Master-Slave-Modus betrieben werden, bei dem ein Master-Roboter 8 für die Verdrahtung eines ersten Kabelendes 7 vorgesehen ist, während der Slave-Roboter 8 für eine Nachführung des gegenüberliegenden Kabelendes 7 vorgesehen ist, etwa derart, dass ein bestimmter Mindestabstand des gegenüberliegenden Kabelendes 7 von der Montageplatte 1 eingehalten wird, um ein Verheddern des Kabels 5 mit auf der Montageplatte 1 angeordneten elektrischen Komponenten 3 zu vermeiden, oder um das Einlegen des Kabels 5 in einen Kabelkanal während der von den Robotern durchgeführten Kabelführung zwischen den beiden miteinander elektrisch zu kontaktierenden Komponenten 3 zu begünstigen.

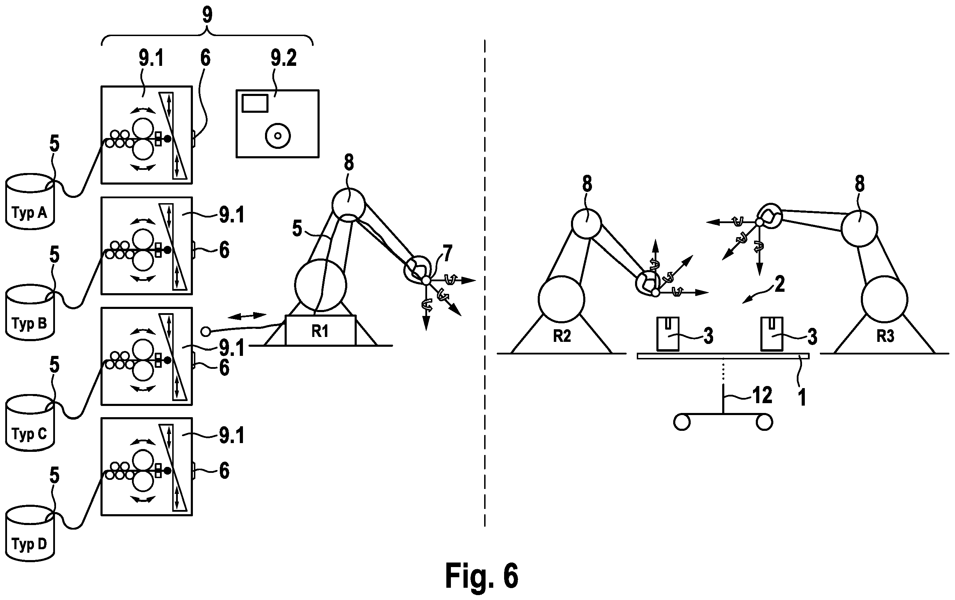

Die in Figur 6 gezeigte Ausführungsform unterscheidet sich von der in Figur 5 gezeigten Ausführungsform darin, dass ein weiterer Knickarmroboter 8 dazu vorgesehen ist, um mithilfe der Kabelkonfektionierungsautomaten 9.1, 9.2 in der zuvor beschriebenen Weise in-time vorkonfektionierte Kabel zu erzeugen und an den zweiarmigen Knickarmroboter 8 zu übergeben.

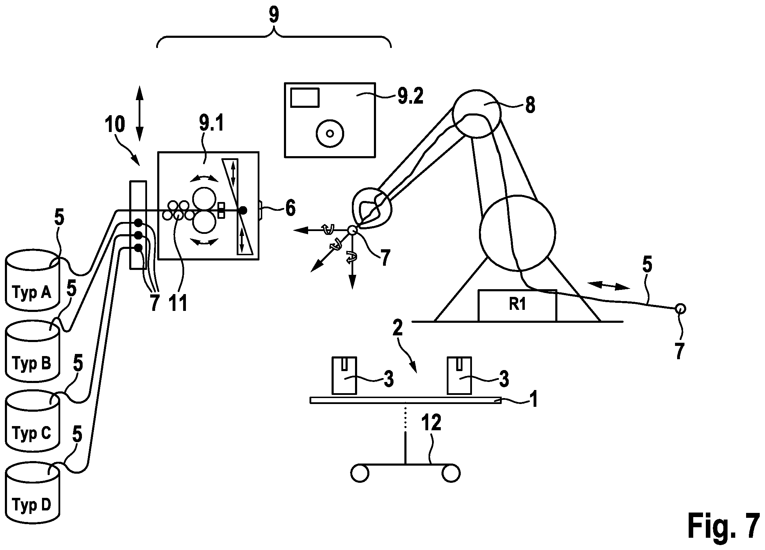

Die in Figur 7 gezeigte Ausführungsform zeigt die Verwendung eines Drahtwechslers 10, mit Hilfe welches einem einzigen Kabelablängautomaten 9.1 verschiedenartige Kabel der Typen A-D, die aus unterschiedlichen Quellen, etwa aus den dargestellten Kabelfässern, bezogen werden, bedarfsweise zugeführt sind. Ein Transportsystem 11 des Kabelablängautomats 9.1 entnimmt ein jeweils bedarfsweise an dem Drahtwechsler 10 bereitgestelltes Drahtende von dem Drahtwechsler 10. Der Drahtwechsler 10 ist in Bezug auf das Transportsystem 11 zwischen seinen unterschiedlichen Abnahmestellen beweglich ist (durch den vertikalen Doppelpfeil verdeutlicht), so dass bedarfsweise ein gewünschter Drahttyp A-D dem Kabelablängautomaten 9.1 zugeführt werden kann.

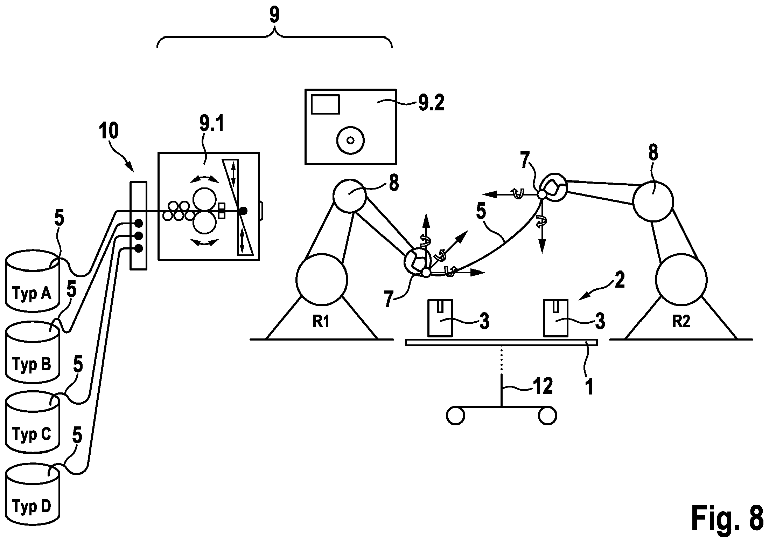

Die Ausführungsform gemäß Figur 8 zeigt eine Variante der Ausführungsform gemäß Figur 7, bei der anstelle eines einarmigen Knickarmroboters 8 ein zweiarmiger Knickarmroboter 8 bzw. zwei einarmige Knickarmroboter 8 verwendet wird/werden. Die Führung der Kabelenden kann unter den Maßgaben erfolgen, wie sie mit Bezug auf die Figur 5 beschrieben worden sind.

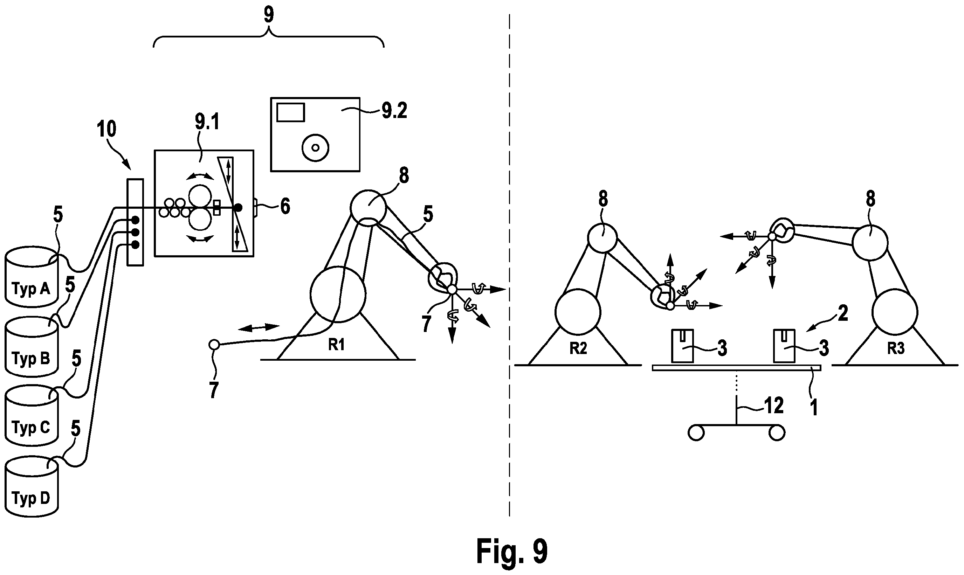

Die Figur 9 zeigt eine Variante der Ausführungsform gemäß Figur 8, bei der zur Abnahme der abgelängten Kabel 5 von dem Kabelablängautomaten 9.1 und zur Aderendbehandlung der abgelängten Kabel 5 mithilfe des Aderendbehandlungsautomaten 9.2 ein separater einarmiger Knickarmroboter 8 vorgesehen ist. Dieser gibt die aderendbehandelten Kabel 5 an zwei weitere für die Verdrahtung kollaborierende einarmige Knickarmroboter 8 weiter. Der kollaborierende Verdrahtungsprozess ist mit Bezug auf Figur 5 beschrieben worden.

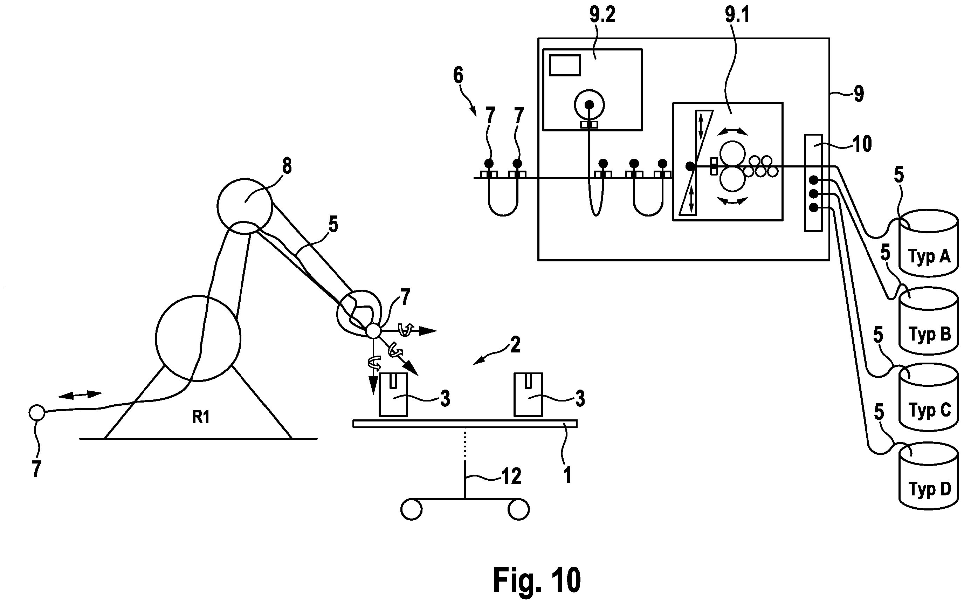

Die Figur 10 zeigt eine weitere Ausführungsform einer erfindungsgemäßen Vorrichtung, bei der ein einarmiger Knickarmroboter 8 über eine Kabelkonfektionierungsanlage 9 bereitgestellte vorkonfektionierte Kabel 5 bezieht. Die Kabelkonfektionierungsanlage9 weist einen Kabelablängautomaten 9.1 auf, dem über einen Drahtwechsler 10 wahlweise Kabel 5 des Typs A-D zugeführt ist. Das abgelängte Kabelstück 5 wird einem Aderendbehandlungsautomaten 9.2 zugeführt, der eine Ausgabe aufweise, über welche die fertig vorkonfektionierten Kabel 5 einzeln, das heißt sequentiell in einer vorgegebenen Verlegereihenfolge ausgegeben werden. Die vorkonfektionierten Kabel 5 sind biegeschlaff und werden von der Kabelkonfektionierungsanlage 9 an einer Schnittstelle 6 in einer U-förmigen Geometrie bereitgestellt. Die Kabel 5 sind an ihren Enden 7 gehaltert, so dass der Knickarmroboter 8 das konfektionierte Kabels 5 bei definierter Anordnung der Kabelenden 7 über die Kabelenden 7 von der Kabelkonfektionierungsanlage 9 abnehmen kann.

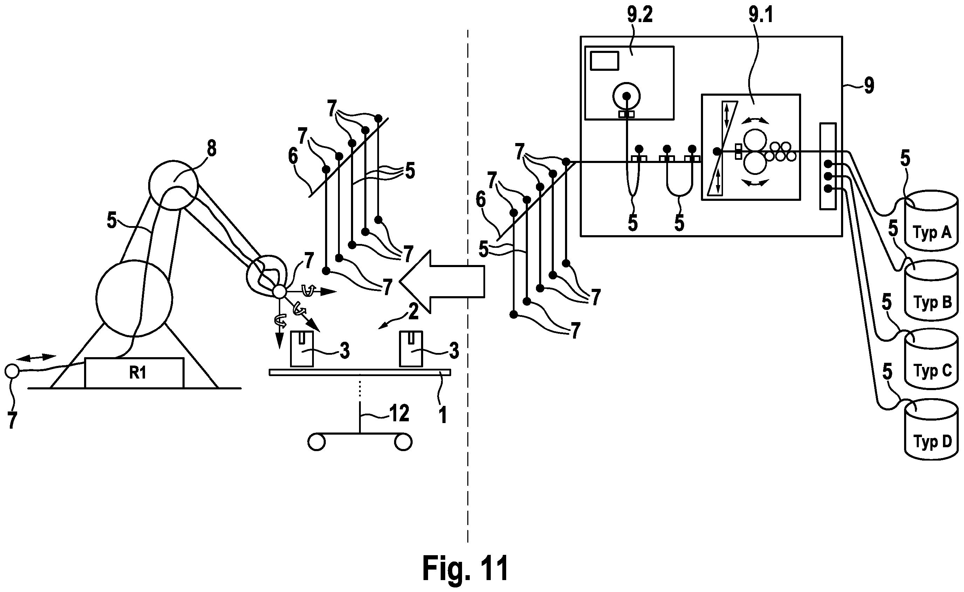

Die in Figur 11 gezeigte Ausführungsform unterscheidet sich von der in Figur 10 gezeigten Ausführungsform darin, dass die Kabelkonfektionierungsanlage 9 separat von der Vorrichtung für die Durchführung des Verfahrens bereitgestellt ist. Mithin produziert die Kabelkonfektionierungsanlage 9 eine als Magazin ausgebildete Übergabeschnittstelle 6 mit mehreren vorkonfektionierten Kabeln 5, die in der Übergabeschnittstelle 6 in einer vorbestimmten Verdrahtungsreihenfolge zueinander und mit vorgegebener Ausrichtung angeordnet sind, so dass der Knickarmroboter 8 die Einzeldrähte 5 aus dem Magazin definiert entnehmen kann, wozu das Magazin in einer vorbestimmten Anordnung und Ausrichtung in Bezug auf den Knickarmroboter 8 ausgerichtet wird. Der Knickarmroboter 8 kann weiterhin eine Erkennungseinrichtung, beispielsweise eine optische Erkennungseinrichtung aufweisen, um die Einzelkabel 5 in dem Magazin zu unterscheiden.

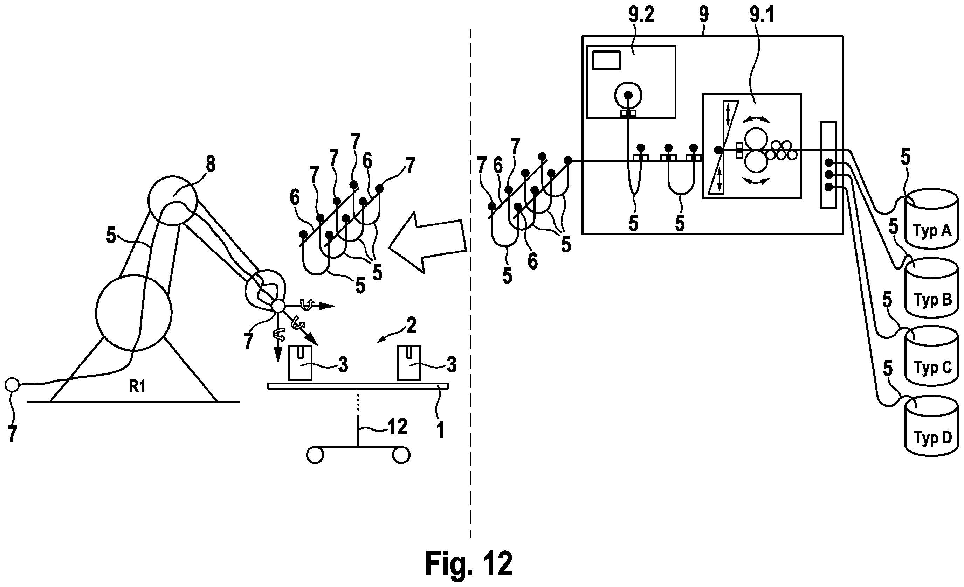

Abweichend von der in Figur 11 gezeigten Ausführungsform weist die in Figur 12 gezeigte Ausführungsform eine Kabelkonfektionierungsanlage 9 auf, bei der das Kabel 5 an seinen beiden gegenüberliegenden Enden 7 in der als Magazin ausgebildeten Übergabeschnittstelle 6 gehalten und damit definiert angeordnet ist, wodurch die Abnahme der Kabel 5 mithilfe des Knickarmroboters 8 erleichtert wird.

### Bezugszeichenliste

- 1: Montageplatte
- 2: Schaltanlage
- 3: Elektrische Komponente
- 4: Elektrische Verdrahtung
- 5: Kabel
- 6: Übergabeschnittstelle
- 7: Kabelende
- 8: Roboter
- 9: Kabelkonfektionierungsautomat
- 9.1: Kabelablängautomat
- 9.2: Aderendbehandlungsautomat
- 10: Drahtwechsler
- 11: Transportsystem
- 12: Montageplattenhandlingwagen
- 13: Kabelanschlussstelle
- 14: Kamera
- 100: Bereitstellen
- 200: Anwenden
- 300: Anpassen
- 400: optisches Erfassen
- 500: Angleichen
- 700: Extrahieren
- 800: Generieren
- 900: Parametrisieren
- 1000: Erzeugung der Robotersteuerung
- 1100: Ansteuern

## Patentansprüche

1. Verfahren zur robotergestützten Verdrahtung von elektrischen Komponenten einer auf einer Montageplatte angeordneten elektrischen Schaltanlage, das die Schritte aufweist:
- Bereitstellen (100) einer Planung einer Schaltanlage (2), die zumindest Ortsinformation und Orientierungsinformation über eine Mehrzahl elektrischer Komponenten (3) der Schaltanlage auf einer Montageplatte (1) und Verdrahtungsinformation über eine Mehrzahl elektrischer Verdrahtungen (4) zwischen jeweils zweien der elektrischen Komponenten (3) aufweist;
- Extrahieren (700) eines Kabelroutings, einschließlich einer Kabelquellkoordinate, einer Kabelzielkoordinate und einem Verlegeweg zwischen der Kabelquellkoordinate und der Kabelzielkoordinate aus der Verdrahtungsinformation für mindestens eine der Mehrzahl Verdrahtungen (4);
- Generieren (800) von Trajektorien- und/oder Vektorpunkten entlang des Kabelroutings und Parametrisieren (900) der Trajektorien- und/oder Vektorpunkte zur Erzeugung einer Robotersteuerung; und
- Ansteuern (1100) eines Roboters mit der Robotersteuerung; **gekennzeichnet durch** das Anwenden (200) einer Prüfroutine auf die Verdrahtungsinformation zur Bestimmung eines Automatisierungsgrades der Verdrahtungen (4) und gegebenenfalls durch das Anpassen (300) der Verdrahtungsinformation zur Maximierung des Automatisierungsgrades.

2. Verfahren nach Anspruch, bei dem bei dem Bereitstellen (100) einer Planung der Schaltanlage (2) weiterhin Komponenteninformation aus der Planung bereitgestellt wird, vorzugsweise mindestens eine Abmessung und/oder eine Kontur der Montageplatte (1), ein Typ mindestens einer der elektrischen Komponenten (3) oder einer weiteren Komponente der elektrischen Schaltanlage (2), eine Anschlussart mindestens einer der elektrischen Komponenten (3), eine Anschlusskoordinate und/oder -vektor mindestens einer der elektrischen Komponenten (3), und/oder eine Geometrie mindestens einer der elektrischen Komponenten (3).

3. Verfahren nach Anspruch 1, das das optische Erfassen (400) einer tatsächlichen Anordnung der elektrischen Komponenten (3) auf der Montageplatte (1) und das Angleichen (500) der Ortsinformation und Orientierungsinformation an die tatsächliche Anordnung aufweist.

4. Verfahren nach Anspruch 1, das das optische Erfassen (400) einer tatsächliche Anordnung der elektrischen Komponenten (3) auf der Montageplatte (1) und das Angleichen (500) des Kabelroutings entsprechend eines erfassten Versatzes zwischen tatsächlicher Anordnung der elektrischen Komponenten (3) und der Ortsinformation und Orientierungsinformation aufweist.

5. Verfahren nach Anspruch 3 oder 4, bei dem das optische Erfassen (400) einer tatsächliche Anordnung der elektrischen Komponenten (3) auf der Montageplatte (1) das optische Erfassen von Hindernissen und/oder das zeitgleiche Ermitteln von Abweichungen zwischen der Ortsinformation und Orientierungsinformation der Planung und der tatsächlichen Anordnung der elektrischen Komponenten (3) auf der Montageplatte (1) sowie das zeitgleiche Angleichen (500) des Kabelroutings aufweist.

6. Verfahren nach einem der vorangegangenen Ansprüche, das das Generieren (800) zusätzlicher Trajektorien- und/oder Vektorpunkten außerhalb des Kabelroutings aufweist, die bei dem Parametrisieren (900) der Trajektorien- und/oder Vektorpunkte zur Erzeugung der Robotersteuerung berücksichtigt werden.

7. Verfahren nach Anspruch 6, bei dem das Generieren (800) zusätzlicher Trajektorien- und/oder Vektorpunkte außerhalb des Kabelroutings das Verlagern von auf dem Kabelrouting liegenden Trajektorien- und/oder Vektorpunkten aufweist, so dass diese außerhalb des Kabelroutings liegen.

8. Verfahren nach Anspruch 6 oder 7, bei dem die zusätzlichen Trajektorien- und/oder Vektorpunkte außerhalb des Kabelroutings an Stellen des Kabelroutings generiert werden, an denen das Kabelrouting eine Richtungsänderung, beispielsweise eine 90°-Richtungsänderung, aufweist.

9. Verfahren nach Anspruch 8, bei dem das Generieren (800) zusätzlicher Trajektorien- und/oder Vektorpunkte außerhalb des Kabelroutings das Generieren von Trajektorien- und/oder Vektorpunkten aufweist, die auf einer Bahnkurve liegen, die einen bestimmten Mindestradius aufweist.

10. Verfahren nach Anspruch 9, bei dem die Trajektorien- und/oder Vektorpunkte für einen ersten Draht mit einem ersten Leiterquerschnitt, der größer als ein zweiter Leiterquerschnitt eines zweiten Drahts ist, entlang einer Bahnkurve generiert werden, die einen größeren Radius aufweist, als der Radius der Bahnkurve, entlang welcher die Trajektorien- und/oder Vektorpunkte für den zweiten Draht generiert werden.

11. Verfahren nach einem der vorangegangenen Ansprüche, das das Extrahieren (700) einer Drahtanschlussrichtung aus der Verdrahtungsinformation und das Generieren (800) von Trajektorien- und/oder Vektorpunkten entlang der Drahtanschlussrichtung sowie das Parametrisieren (900) dieser Trajektorien- und/oder Vektorpunkte zur Erzeugung der Robotersteuerung aufweist.

12. Verfahren nach einem der vorangegangenen Ansprüche, das das Extrahieren (700) einer Kabelendbehandlung aus der Verdrahtungsinformation aufweist, wobei das Verfahren das Parametrisieren (900) einer an die Kabelendbehandlung angepassten Greifbewegung zur Ansteuerung des Roboters aufweist.

13. Verfahren nach einem der vorangegangenen Ansprüche, bei dem in dem Fall, dass bei dem Extrahieren (700) ein Verlegeweg einer der elektrischen Verdrahtungen (4) extrahiert wird, der eine 90°-Richtungsänderung aufweist, zusätzliche Trajektorien- und/oder Vektorpunkte erzeugt werden, die dem Außenradius der 90°-Richtungsänderung um einen Abstand vorgelagert sind.

## Claims

1. A method for robotically wiring electrical components of an electrical switchgear arranged on a mounting plate, comprising the steps:
- Providing (100) a design of a switchgear (2) having at least location information and orientation information about a plurality of electrical components (3) of the switchgear on a mounting plate (1) and wiring information about a plurality of electrical wirings (4) between every two of the electrical components (3);
- Extracting (700) a cable routing including a cable source coordinate, a cable destination coordinate, and a routing path between the cable source coordinate and the cable destination coordinate from the wiring information for at least one of the plurality of wirings (4);
- Generating (800) trajectory and/or vector points along the cable routing and parameterizing (900) the trajectory and/or vector points to generate a robot control; and
- Controlling (1100) a robot with the robot control;
**characterized by** applying (200) a test routine to the wiring information to determine a degree of automation of the wirings (4), and optionally adjusting (300) the wiring information to maximize the degree of automation.

2. The method according to claim 1, in which, when providing (100) a design of the switchgear (2), component information is further provided from the design, preferably at least a dimension and/or a contour of the mounting plate (1), a type of at least one of the electrical components (3) or of a further component of the electrical switchgear (2), a connection type of at least one of the electrical components (3), a connection coordinate and/or vector of at least one of the electrical components (3), and/or a geometry of at least one of the electrical components (3).

3. The method according to claim 1, comprising optically detecting (400) an actual arrangement of the electrical components (3) on the mounting plate (1) and matching (500) the location information and orientation information to the actual arrangement.

4. The method according to claim 1, comprising optically detecting (400) an actual arrangement of the electrical components (3) on the mounting plate (1) and adjusting (500) the cable routing according to a detected offset between actual arrangement of the electrical components (3) and the location information and orientation information.

5. The method according to claim 3 or 4, wherein the optical detection (400) of an actual arrangement of the electrical components (3) on the mounting plate (1) comprises the optical detection of obstacles and/or the simultaneous determination of deviations between the location information and orientation information of the design and the actual arrangement of the electrical components (3) on the mounting plate (1) as well as the simultaneous adjustment (500) of the cable routing.

6. The method according to any one of the preceding claims, comprising generating (800) additional trajectory and/or vector points outside the cable routing that are taken into account when parameterizing (900) the trajectory and/or vector points to generate the robot control.

7. The method of claim 6, wherein generating (800) additional trajectory and/or vector points outside of the cable routing comprises relocating trajectory and/or vector points lying on the cable routing to lie outside of the cable routing.

8. The method of claim 6 or 7, wherein the additional trajectory and/or vector points are generated outside of the cable routing at locations of the cable routing where the cable routing has a change in direction, such as a 90° change in direction.

9. The method of claim 8, wherein generating (800) additional trajectory and/or vector points outside of the cable routing comprises generating trajectory and/or vector points that lie on a trajectory curve that has a certain minimum radius.

10. The method of claim 9, wherein the trajectory and/or vector points for a first wire having a first conductor cross-section greater than a second conductor cross-section of a second wire are generated along a trajectory curve having a radius greater than the radius of the trajectory curve along which the trajectory and/or vector points for the second wire are generated.

11. The method according to any one of the preceding claims, comprising extracting (700) a wire connection direction from the wiring information and generating (800) trajectory and/or vector points along the wire connection direction and parameterizing (900) these trajectory and/or vector points to generate the robot control.

12. The method according to any one of the preceding claims, comprising extracting (700) a cable end treatment from the wiring information, the method comprising parameterizing (900) a gripping motion adapted to the cable end treatment for controlling the robot.

13. The method according to any one of the preceding claims, wherein, in the case that a laying path of one of the electrical wirings (4) having a 90° change of direction is extracted during the extracting (700), additional trajectory and/or vector points are generated which are upstream of the outer radius of the 90° change of direction by a distance.

## Revendications

1. Procédé de câblage assisté par robot de composants électriques d'une installation de commutation électrique disposée sur une plaque de montage, qui comprend les étapes suivantes :
- mise à disposition (100) d'une planification d'une installation de commutation (2), qui comprend au moins une information d'emplacement et une information d'orientation concernant une pluralité de composants électriques (3) de l'installation de commutation sur une plaque de montage (1) et une information de câblage concernant une pluralité de câblages électriques (4) respectivement entre deux des composants électriques (3) ;
- extraction (700) d'un routage de câbles, y compris une coordonnée source de câble, une coordonnée cible de câble et un chemin de pose entre la coordonnée source de câble et la coordonnée cible de câble, à partir de l'information de câblage pour au moins un de la pluralité de câblages (4) ;
- génération (800) de points de trajectoires et/ou de vecteurs le long du routage de câble et paramétrage (900) des points de trajectoires et/ou de vecteurs afin de générer une commande de robot ; et
- contrôle (1100) d'un robot avec la commande de robot ;
**caractérisé par** l'application (200) d'une routine de vérification à l'information de câblage afin de déterminer un degré d'automatisation des câblages (4) et, le cas échéant, par l'adaptation (300) de l'information de câblage pour la maximisation du degré d'automatisation.

2. Procédé selon la revendication 1, dans lequel, lors de la mise à disposition (100) d'une planification de l'installation de commutation (2) une information de composant est en outre mise à disposition à partir de la planification, de préférence au moins une dimension et/ou un contour de la plaque de montage (1), un type d'au moins d'un des composants électriques (3) ou d'un autre composant de l'installation de commutation électrique (2), un type de raccordement d'au moins un des composants électriques (3), une coordonnée et/ou un vecteur de raccordement d'au moins un des composants électriques (3) et/ou une géométrie d'au moins un des composants électriques (3).

3. Procédé selon la revendication 1, qui comprend la détection optique (400) d'une disposition effective des composants électriques (3) sur la plaque de montage (1) et l'adaptation (500) de l'information d'emplacement et de l'information d'orientation à la disposition effective.

4. Procédé selon la revendication 1, qui comprend la détection optique (400) d'une disposition effective des composants électriques (3) sur la plaque de montage (1) et l'adaptation (500) du routage de câbles en fonction d'un décalage détecté entre la disposition effective des composants électriques (3) et l'information d'emplacement et l'information d'orientation.

5. Procédé selon la revendication 3 ou 4, dans lequel la détection optique (400) d'une disposition effective des composants électriques (3) sur la plaque de montage (1) comprend la détection optique d'obstacles et/ou la détermination simultanée d'écarts entre l'information d'emplacement et l'information d'orientation de la planification et la disposition effective des composants électriques (3) sur la plaque de montage (1) ainsi que l'adaptation simultanée (500) du routage de câble.

6. Procédé selon l'une des revendications précédentes, qui comprend la génération (800) de points de trajectoires et/ou de vecteurs supplémentaires hors du routage de câble, qui sont pris en compte lors du paramétrage (900) des points de trajectoires et/ou de vecteurs pour la génération de la commande de robot.

7. Procédé selon la revendication 6, dans lequel la génération (800) de points de trajectoires et/ou de vecteurs supplémentaires hors du routage de câble comprend le déplacement des points de trajectoires et/ou de vecteurs se trouvant sur le routage de câble, de façon à ce qu'ils se trouvent hors du routage de câble.

8. Procédé selon la revendication 6 ou 7, dans lequel les points de trajectoires et/ou de vecteurs supplémentaires hors du routage de câble sont générés aux endroits du routage de câble où le routage de câble présente un changement de direction, par exemple un changement de direction de 90°.

9. Procédé selon la revendication 8, dans lequel la génération (800) de points de trajectoires et/ou de vecteurs supplémentaires hors du routage de câble comprend la génération de points de trajectoires et/ou de vecteurs qui se trouvent sur une trajectoire présentant un rayon minimal déterminé.

10. Procédé selon la revendication 9, dans lequel les points de trajectoires et/ou de vecteurs pour un premier fil avec une première section transversale de conducteur supérieure à une deuxième section transversale de conducteur d'un deuxième fil, sont générés le long d'une trajectoire qui présente un rayon supérieur au rayon de la trajectoire le long de laquelle les points de trajectoires et/ou de vecteurs pour le deuxième fil sont générés.

11. Procédé selon l'une des revendications précédentes, qui comprend l'extraction (700) d'une direction de raccordement de fil à partir de l'information de câblage et la génération (800) de points de trajectoires et/ou de vecteurs le long de la direction de raccordement de fil ainsi que le paramétrage (900) de ces points de trajectoires et/ou de vecteurs afin de générer la commande de robot.

12. Procédé selon l'une des revendications précédentes, qui comprend l'extraction (700) d'un traitement d'extrémité de câble à partir de l'information de câblage, dans lequel le procédé comprend le paramétrage (900) d'un mouvement de préhension adapté au traitement d'extrémité de câble pour le contrôle du robot.

13. Procédé selon l'une des revendications précédentes, dans lequel, dans le cas où, lors de l'extraction (700), un chemin de pose d'un des câblages électriques (4) est extrait, qui présente un changement de direction de 90°, des points de trajectoires et/ou de vecteurs sont générés, qui sont disposés en amont, à une certaine distance, du rayon extérieur du changement de direction de 90°.
